# EUROPEAN PATENT SPECIFICATION

(11) **EP 2 987 403 B1**
(45) Date of publication and mention of the grant of the patent: **15.08.2018**
(21) Application number: 15188161.2
(22) Date of filing: 04.05.2012
(51) Int. Cl.: A01K 13/00, A45D 24/22, A45D 24/26, A61D 7/00, A45D 34/04

(54) **DEVICE FOR APPLYING A FORMULATION TO SKIN**
VORRICHTUNG ZUM AUFTRAGEN EINER FORMULIERUNG AUF DIE HAUT
DISPOSITIF D'APPLICATION D'UNE FORMULATION SUR LA PEAU

(30) Priority: 05.05.2011 US 201161483010 P; 13.03.2012 US 201213419365
(43) Date of publication of application: 24.02.2016
(62) Divisional of application: 12722994.6
(73) Proprietor: Wellmark International, Schaumburg, Illinois 60173 (US)
(72) Inventor: Hartman, John David, Schaumburg, Illinois 60173 (US); Nguyen, Kim Thuy, Schaumburg, Illinois 60173 (US)
(74) Representative: Rupp, Christian

(56) References cited:
- FR-A1- 2 504 367
- US-A1- 2009 105 673
- US-A1- 2010 087 790

## Description

### BACKGROUND OF THE INVENTION

Today's spot-on applicators do not fully satisfy consumers who want to keep their hands clean, effectively apply the formulation (e.g., insecticides) to their pets' skin, and confidently apply the complete dose of formulation. There are also toxicity concerns regarding the application of insecticides, which make methods that do not require direct human contact with the insecticides more attractive.

Given these consumer needs, some advantageous features for an applicator would include 1) protection of the user's hands from inadvertent exposure to the formulation (e.g., an insecticide) during any stage of the application; 2) easy opening of a formulation container, such a disposable cartridge; 3) effective application of the formulation onto the animal's skin, despite the animal's fur; and 4) easy disposal of the formulation container. Another advantageous feature would be a way to provide feedback upon delivery of the full dosage, so the operator is confident that application is complete.
US 2010/0087790 A1 discloses an applicator, which directly delivers one or more active ingredients, such as flea, tick, or insect repellant to an animal's skin. The applicator comprises an applicator base connected to an applicator head having at least one prong member constructed with an internal channel therein in communication with a delivery aperture.

There is a need in the art for a new spot-on applicator that satisfies these consumer demands. The present invention satisfies these and other needs.

### BRIEF SUMMARY OF THE INVENTION

In certain embodiments, the present invention provides a device for applying a formulation to the skin. Claim 1 describes a device according to the invention. Claim 13 describes a method according to the invention.

In certain aspects, the present invention sets forth improvements over prior art thermoform-disposable dispensers, including hands-free cracking open of the disposable cartridge comprising the formulation, low effort dispensing of the formulation, a "fur parter" that allows the formulation (i.e., the fluid or powder) to be more accurately placed on the skin layer of the pet, and hands-free removal of empty cartridge. Advantageously, it is an ergonomically friendly device that offers increased differentiation between the dog and the cat formulas. Moreover, it creates a barrier to help prevent the dispensed formulation from getting on the operator's hands.

In certain aspects, the device provides a visual indicator showing fluid level. In certain aspects, it provides audible signals during dispensing, such as a sound indicating that a specified portion of the formulation has been dispensed (e.g., a click upon completion).

These and other embodiments will become more apparent when read with the detailed description and figures that follow.

### BRIEF DESCRIPTION OF THE DRAWINGS

FIG. 1A illustrates a top view of an embodiment of the device; FIG. 1B shows a side view of an embodiment and FIG. 1C shows a perspective view.
FIG. 2A illustrates a top view of an embodiment of the device when opened without the cartridge; FIG. 2B shows a top view of an embodiment with the cartridge in place.
FIG. 3A illustrates a top view of a second embodiment of the device; FIG. 3B shows a side view of an embodiment, and FIG. 3C shows a perspective view.
FIG. 4A illustrates a top view of an embodiment of the device when opened without the cartridge; FIG. 4B shows a top view of an embodiment with the cartridge in place.
FIG. 5 illustrates a method of use for one embodiment of the device. FIG. 5A illustrates using a finger to open an embodiment's top lift door; FIG. 5B shows loading a cartridge into the device; FIG 5C shows closing the door; FIG. 5D shows pressing the circle and apply to pet; FIG 5E shows disposal.
FIG. 6 presents an interior view of an embodiment of the device, with a perspective view of the front, top, and right side when the device is open.
FIG. 7 presents an additional interior view of an embodiment of the device, with a view of the bottom side of a cartridge for use in the device and a partial view of the device when it is open.
FIGS. 8A-B present additional interior views of an embodiment of the device, with FIG. 8A showing the cartridge inserted into the device when it is open; and FIG. 8B showing the cartridge inserted into the device when the movable top piece is half-closed.

### DETAILED DESCRIPTION OF THE INVENTION

### I. Definitions

The terms "a," "an," or "the" as used herein not only includes aspects with one member, but also aspects with more than one member. For example, an embodiment including "an insecticide and a conditioner" should be understood to present aspects with at least a second insecticide, at least a second conditioner, or both.

The term "about" as used herein to modify a numerical value indicates a defined range around that value. If "X" were the value, "about X" would generally indicate a value from 0.95X to 1.05X. Any reference to "about X" specifically indicates at least the values X, 0.95X, 0.96X, 0.97X, 0.98X, 0.99X, 1.01X, 1.02X, 1.03X, 1.04X, and 1.05X. Thus, "about X" is intended to teach and provide written description support for a claim limitation of, *e.g.,* "0.98X." When "about" is applied to the beginning of a numerical range, it applies to both ends of the range. Thus, "from about 10° to 25°" is equivalent to "from about 10° to about 25°." When "about" is applied to the first value of a set of values, it applies to all values in that set. Thus, "about 1°, 5°, or 10°" is equivalent to "about 1°, about 5°, or about 10°."

In formulations comprising an "additional," "further," or "second" component, the second component as used herein is chemically different from the other components or first component. A "third" component is different from the other, first, and second components, and further enumerated or "additional" components are similarly different.

The term "or" as used herein should in general be construed non-exclusively. For example, an embodiment of "a formulation comprising A or B" would typically present an aspect with a formulation comprising both A and B. "Or" should, however, be construed to exclude those aspects presented that cannot be combined without contradiction.

Generally, when a range is taught, it incorporates all full or partial amount in between the endpoint (*i.e.,* within the bounds of the range). For example, a range of 5° to 35° would also teach *inter alia* the specific values of 8.47° and 23°. A range of about 10° to 25° would also teach *inter alia* the specific values of 14.13°, 18°, and 21.1°.

### II. Embodiments

Disclosed is a device for applying a formulation to skin, the device comprising:
(a) a housing, wherein the housing comprises a chamber for receiving a cartridge; wherein the cartridge comprises the formulation;
(b) a spreading means, wherein the spreading means is operably connected with the housing or cartridge; wherein during use, the spreading means moves or spreads a plurality of the skin's epidermal growths; and
(c) an ejecting means, wherein the ejecting means is operably connected with the housing.

The housing can be substantially composed of a polymer.

The chamber can be configured with a size and shape that fits a cartridge directed to a specific use.

The specific use of the device can be to kill fleas and ticks on dogs.

The specific use of the device can be to kill fleas and ticks on cats.

The chamber can be composed of a flexible, deformable material so that the chamber can be squeezed to apply pressure on the cartridge to facilitate release of the formulation from the cartridge.

The formulation can include an active ingredient selected from the group consisting of an insect repellant, an insecticide, a tick repellant, a tick treatment, a mite repellent, a mite treatment, a conditioner, a moisturizer, an anti-bacterial compound, and a combination thereof.

During use of the device the spreading means can be proximate to a dispensing means that dispenses the formulation from the cartridge to the skin; and wherein the dispensing means is operably connected with the housing or cartridge.

The spreading means can be operably connected with the housing.

The spreading means can be a tab, a trident, or a comb. The spreading means can be a tab; wherein the tab is proximate to a dispensing means for the formulation; wherein the dispensing means is operably connected with the housing or cartridge; and wherein during use, the tab spreads the plurality of epithelial growths to improve the formulation's contact with the skin. The tab can have at least two projecting prongs. At least one prong, tine, or tooth of the spreading means can comprise an angled tip. At least one prong, tine, or tooth of the spreading means can have a U-shaped cross-section. At least one prong, tine, or tooth can be cylindrical.

The spreading means can extend from the housing at a non-zero angle. The non-zero angle can be from 1° to 45°. The non-zero angle can be from 5° to 35°. The non-zero angle cam be from 10° to 25°.

After use of the device, the ejecting means can eject the cartridge without a user's touching of the cartridge or formulation.

The device can further comprise: (d) a triggering means; wherein the triggering means is operably connected with the housing or cartridge; and wherein an activation of the triggering means allows the formulation to be dispensed from the cartridge. The triggering means can be a button. The triggering means can be operably connected with the housing. The triggering means can be a panel; wherein the panel is attached to the housing, and wherein closing the panel is the activation of the triggering means. The panel can be attached to the panel by a pivoting means.

The device can further comprise: (e) a measuring means; wherein the measuring means is operably connected with the housing or cartridge; and wherein the measuring means allows the user to identify how much formulation has been dispensed. The measuring means can be a transparent or translucent window in the housing.

The device can further comprise: (f) a dispensing means, wherein the dispensing means is operably connected with the housing or cartridge. The dispensing means can be a rollerball.

The cartridge of the device can further comprise: (1) a reservoir; wherein the reservoir comprises the formulation; and (2) a dispensing means; wherein the dispensing means is operably connected with the reservoir; and wherein during use, the dispensing means dispenses the formulation onto the skin. The dispensing means can be a conduit attached to the reservoir at one end. The conduit can be sealed at one end, and wherein the seal is broken to activate the dispensing means for use.

Disclosed is also a device for applying a formulation to skin, the device comprising:
(a) a housing, wherein the housing comprises a chamber for receiving a cartridge; wherein the cartridge comprises the formulation;
(b) a spreading means, wherein the spreading means is operably connected with the housing or cartridge; wherein during use, the spreading means moves or spreads a plurality of the skin's epidermal growths;
(c) an ejecting means, wherein the ejecting means is operably connected with the housing;
(d) a triggering means; wherein the triggering means is operably connected with the housing or cartridge; and wherein an activation of the triggering means allows the formulation to be dispensed from the cartridge;
(e) a measuring means; wherein the measuring means is operably connected with the housing or cartridge; and wherein the measuring means allows the user to identify how much formulation has been dispensed; and
(f) a dispensing means; wherein the dispensing means is operably connected with the housing or cartridge; wherein the dispensing means dispenses the formulation from the cartridge to the skin; and wherein during use, the spreading means is proximate to the dispensing means.

Disclosed is a kit for applying a formulation to skin, the kit comprising:
(a) a device as defined above;
(b) at least one cartridge comprising the formulation, wherein the cartridge is adapted for use in the device; and
(c) instructions for applying the formulation to skin and for ejecting the cartridge without the user's touching of the cartridge or formulation.

Disclosed is also a method for applying a formulation to skin, the method comprising the steps:
(a) inserting a cartridge into a device as defined above, wherein the cartridge comprises the formulation;
(b) applying the formulation to the skin by means of the device; and
(c) ejecting the cartridge.

The method can further comprise the step of activating a triggering means to allow the formulation to be dispensed from the cartridge.

In one embodiment, the present device creates a barrier to help prevent or reduce liquid from getting on hands; optionally notifies the pet owner when application is complete (e.g., by an audible signal or visual indicator); parts hair to help the formulation gets down to the skin (e.g., by use of a fin to part the hair or fur); has a contemporary design; is ergonomically contoured for easy handling; is sturdy and secure in hand; has a better grip; and has a re-closable packaging for storage.

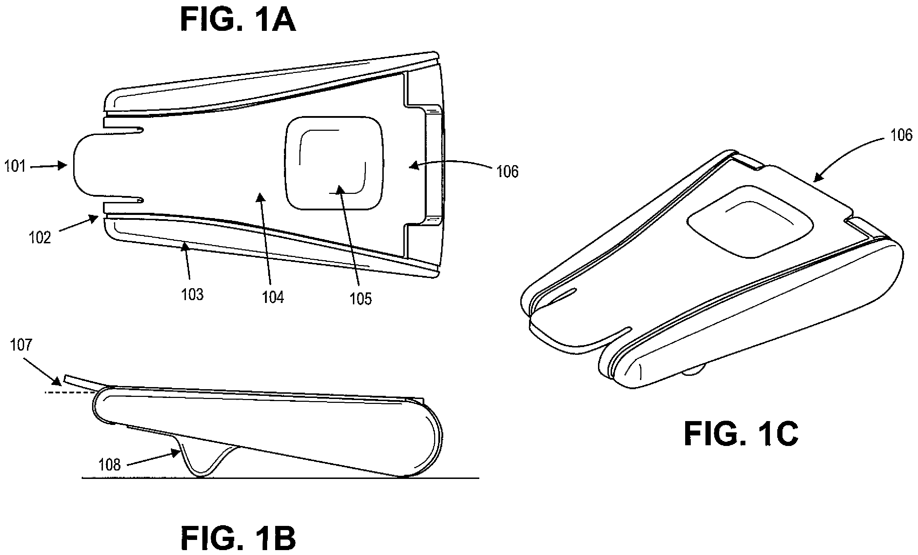

FIG. 1A illustrates a top view of an embodiment of the device. The device is well-suited for applying a formulation to the skin, such as an animal or pet (e.g., a cat or dog). In certain instances, the formulation includes an active ingredient selected from the group of an insect repellant, an insecticide, a tick repellant, a tick treatment, a mite repellent, a mite treatment, a conditioner, a moisturizer, an anti-bacterial compound, and a combination thereof. The device comprises a housing, wherein the housing comprises a chamber for receiving a cartridge; and wherein the cartridge comprises a formulation. In one embodiment, the housing is substantially composed of a polymer (e.g., a plastic), such as a thermoplastic polymer or combination of polymers. Suitable examples include, but are not limited to, polycarbonate (PC), acrylonitrile butadiene styrene (ABS) and combinations thereof (PC-ABS). Other examples include polypropylene. In certain embodiments, the device comprises no rubber. In one aspect, the housing is made of a PC-ABS type composite and the sides are made of polypropylene.

In one aspect, the device comprises a spreading means 101, wherein the spreading means is operably connected with the top of the housing 104 or cartridge; wherein during use, the spreading means moves or spreads a plurality of the skin's epidermal growths. The device has a right side and a left side of the housing, making it easy to pick up the lid 104 of the housing. FIG 1B shows a finger grip 108 allowing for easy spreading of the formulation using 107, which is 101 in FIG. 1A. In one embodiment, the spreading means 101 is flexible, and in certain instances, moves independently from top portion 102. In certain instances, the spreading means is a tab; wherein the tab is proximate to a dispensing means for the formulation; wherein the dispensing means is operably connected with the housing or cartridge; and wherein during use, the tab spreads the plurality of epithelial growths to improve the formulation's contact with the skin. In certain instances, side portion 103 of the device is ergonomically formed. Button 105 is a triggering means.

In other embodiments, the tab has at least two projecting prongs. In other aspects, at least one prong, tine, or tooth of the spreading means comprises an angled tip. In other aspects, at least one prong, tine, or tooth has a U-shaped cross-section. In other aspects, at least one prong, tine, or tooth is cylindrical. In other aspects, the spreading means extends from the housing at a non-zero angle. In still other aspects, the non-zero angle is from 1° to 45°. In other aspects, the non-zero angle is from 5° to 35° or from 10° to 25°.

FIG. 1A and FIG. 1C shows the hinge means 106, which allows for the lifting of the lid, door or top portion of the housing.

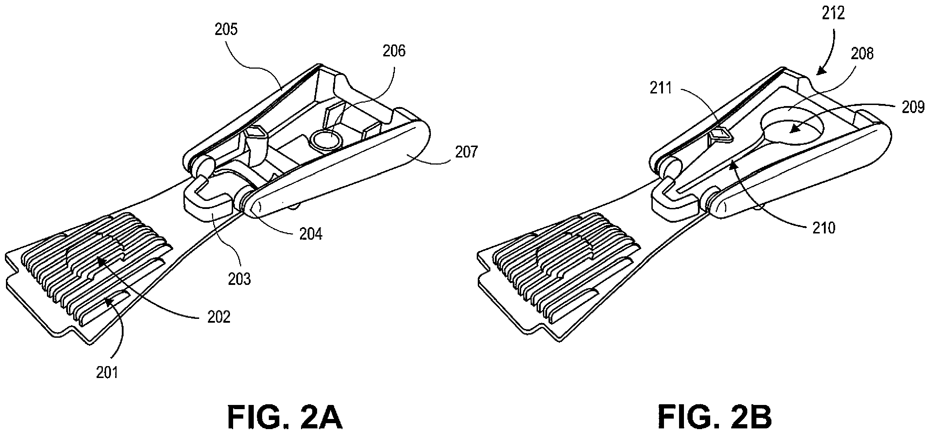

Turning now to an embodiment shown in FIG. 2A, the lid or door is lifted on the housing to show a chamber. In one aspect, the chamber is configured with a size and shape that fits a cartridge directed to a specific use. One specific use is to kill fleas and ticks on dogs. Another specific use is to kill fleas and ticks on cats. Advantageously, the use of different shapes for different formulation cartridges prevents or discourages misapplication of formulations by making it easier to distinguish cartridges with different formulations.

In one embodiment, the device's chamber is composed of a flexible, deformable material so that the chamber can be squeezed to apply pressure on the cartridge to facilitate release of the formulation from the cartridge. In certain instances, the ejecting means ejects the cartridge without the user's touching of the cartridge or formulation.

In one embodiment (e.g., FIG. 2A), the device further comprises a triggering means 201, wherein the triggering means 201 is operably connected with the housing or cartridge; and wherein an activation of the triggering means allows the formulation to be dispensed from the cartridge 210. In certain aspects, the device comprises a triggering means 201, which is a panel of ridges. In certain aspects, the triggering means comprises the opposite side of a button 202. In one instance, the triggering means is a panel 201; wherein the panel is attached to the housing, and wherein closing the panel or lid is the activation of the triggering means. In one instance, the lid is attached by a pivoting means or hinge. Feature 203 is a U-shaped raised portion, which seats cartridge properly. The side of the device 207 allows easy handling and comprises feature 204, which is this embodiment is a rounded portion on the back side of the device. The top of the housing fits with side 205 and optionally closes with a snap. FIG. 2B shows device 212 with feature 211 as an optional clip to hold the cartridge 208. Feature 209 is a reservoir and feature 210 is a channel in fluid communication therewith. Reservoir 209 holds a formulation with an active ingredient.

In certain aspects, the present invention sets forth a dispensing means that is a roller-ball tip dispenser. As the dispenser tip moves over the surface, it dispenses the formulation onto the skin or surface. If the dispenser tip stops moving, it stops dispensing the formulation. In some aspects, the invention further sets forth a spreading means that is a V-shaped trough or fin style projection that parts the hair and exposes skin for application of the medication. In some embodiments (e.g., those shown in the figures), the device includes a lip that acts to spread the fur or hair, thereby facilitating the application of the fluid to the skin. In some aspects, movement is from tail to head "against" natural hair growth direction to allow easier spreading.

In certain aspects, different medications are color-coded to prevent misapplication. In certain aspects, cartridges for different formulations are different shapes or sizes to prevent misapplication. For example, an embodiment set forth in the figures have cartridges that are different shapes to prevent a cartridge intended only for use with an animal (e.g., a dog) from being used in a dispenser designed for a second animal (e.g., a cat). This can advantageously deter negligent misapplication of medications that would be toxic to the second animal.

As mentioned, differences in cartridge design advantageously allow easy differentiation of dog and cat formulations. In one embodiment of a dog formulation, this differences include a unique or easily distinguishable packaging; a unique or easily distinguishable applicator with a rounded shape for the applicator and thermoform cartridge; and an added "DOG" embossed on applicator and thermoform.

In one example of a cat formulation, the differences include a unique or easily distinguishable packaging; a unique or easily distinguishable applicator with a squared shape for applicator and thermoform; and an added "CAT" embossed on the applicator and thermoform.

In certain instances, the applicator device and thermoforms are clearly marked and colored coded to help prevent misapplication between species and animal size. In one aspect, a dog thermoform will not work in a cat applicator and vice versa. The applicator helps create a more controlled, reliable application. It also helps prevent or reduce getting liquid on the operator's hands, and it aids in getting the applied formulation down to the skin.

In some aspects, the dispenser may be color-coded to prevent misapplication or for easy identification of the proper cartridge for use. In some aspects, the color of the movable top piece may be purple, burgundy, or red, and the remainder of the device may be black, dark gray, or light gray. Alternatively, the color of the movable top piece (or door) may be red, blue, orange, or pink, and the remainder of the device may be black, dark gray, or light gray. Alternatively, the color of the movable top piece may be green or blue (preferably, green), and the remainder of the device may be black, dark gray, or light gray.

In some aspects, the lower half of the device has a texture and color similar to the top. In other aspects, the lower half s texture or color may be different (*e.g.,* darker). In some aspects, the texture may be different (*e.g.,* a heavy or slightly rough texture on the bottom, and a smooth texture on the top).

In one embodiment, the device optionally comprises a measuring means 206 (e.g., a window); wherein the measuring means is operably connected with the housing or cartridge; and wherein the measuring means allows the user to identify how much formulation has been dispensed. In certain aspects, the measuring means is a transparent or translucent window 206 in the housing. In certain aspects, the device further comprises a dispensing means, wherein the dispensing means is operably connected with the housing or cartridge.

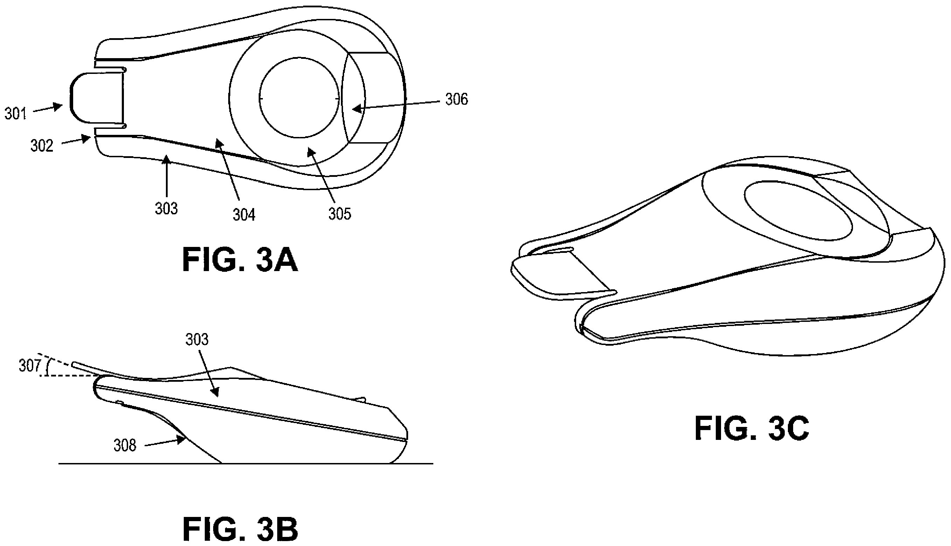

FIG. 3A illustrates a top view of one embodiment of the device. FIG 3A has suitable features including a tab 301 for spreading a formulation, separated from the top 302 of the housing by grooves, an ergonomic side panel 303, the top of the housing 304, button 305 and hinge 306. FIG. 3B shows a side view of the device and has features including side 303, tab 307 and grip 308. FIG. 3C shows a perspective view of an embodiment. Certain of the features in 3A-C are analogous to the features in FIGs. 1A-C.

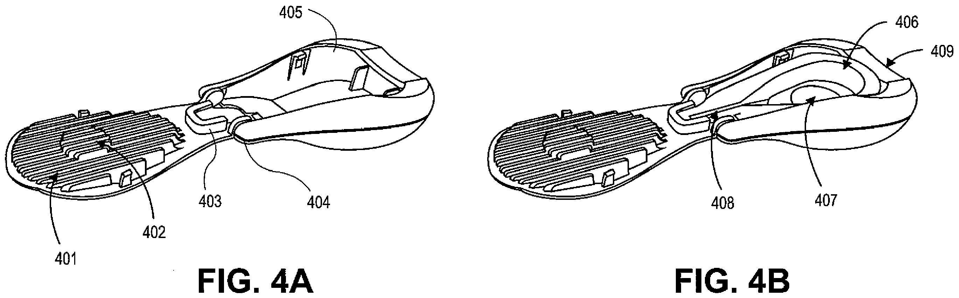

FIG. 4A illustrates a top view of the device when opened without the cartridge. FIG. 4B shows a top view with the cartridge in place. FIG. 4A has features 401, 402, 403, 404 and 405. Certain of these features are analogous to features in FIG. 2A. FIG. 4B has features 406, 407, 408, and 409. Certain of these features are analogous to features in FIG. 2B.

For example, a triggering means 401 is shown, wherein the triggering means 401 is operably connected with the housing or cartridge. FIG. 4A illustrates a top view of the device when opened without the cartridge. The cartridge sits or is disposed inside housing 405. In certain aspects, the triggering means comprises the opposite side of a button 402. In one instance, the triggering means is a panel 401; wherein the panel is attached to the housing, and wherein closing the panel or lid is the activation of the triggering means. In one instance, the lid is attached by a pivoting means or hinge. Feature 403 is a U-shaped raised portion, which seats the cartridge properly. Feature 404 is the rounded back of the device.

FIG. 4B shows a top view with the cartridge in place. Feature 407 is a reservoir and feature 408 is a channel in fluid communication with the formulation. In addition, an activation of the triggering means allows the formulation to be dispensed from the cartridge 406. Feature 409 allows for the fitting of the top of the housing or lid.

In one embodiment, the device comprises:
(a) a housing, wherein the housing comprises a chamber for receiving a cartridge; wherein the cartridge comprises the formulation;
(b) a spreading means, wherein the spreading means is operably connected with the housing or cartridge; wherein during use, the spreading means moves or spreads a plurality of the skin's epidermal growths (e.g., hair or fur);
(c) an ejecting means, wherein the ejecting means is operably connected with the housing;
(d) a triggering means; wherein the triggering means is operably connected with the housing or cartridge; and wherein an activation of the triggering means allows the formulation to be dispensed from the cartridge;
(e) a measuring means; wherein the measuring means is operably connected with the housing or cartridge; and wherein the measuring means allows the user to identify how much formulation has been dispensed; and
(f) a dispensing means; wherein the dispensing means is operably connected with the housing or cartridge; wherein the dispensing means dispenses the formulation from the cartridge to the skin; and wherein during use, the spreading means is proximate to the dispensing means.

Also described is a kit for applying a formulation to skin, the kit comprising:
(a) a device as described herein;
(b) at least one cartridge comprising the formulation, wherein the cartridge is adapted for use in the device; and
(c) instructions for applying the formulation to skin and for ejecting the cartridge without the user's touching of the cartridge or formulation.

In another embodiment, the present invention provides a method for applying a formulation to skin, the method comprising the steps:
(a) inserting a cartridge into a device as described in the present application (e.g., any of claims 1-13), wherein the cartridge comprises the formulation;
(b) applying the formulation to the skin by means of the device; and
(c) ejecting the cartridge. In certain aspects, the method further comprises the step of activating a triggering means to allow the formulation to be dispensed from the cartridge.

In one embodiment, the device comprises five components. Component 1) is an upper shell; component 2) is a lower shell; component 3) is door; component 4) is a left-hand button; and component 5) is a right-hand button. The shells comprise the door and two buttons. In certain instances, the components are injection molded plastic. In certain instances, there are five or more unique thermoform sizes (i.e., cartridge or cartridge housing sizes) for dogs and two sizes for cats. These thermoforms fit inside the applicator without any modifications. Each thermoform is designed to fully dispense in a set number of manually applied cycles. In certain instances, the number varies by dosage size.

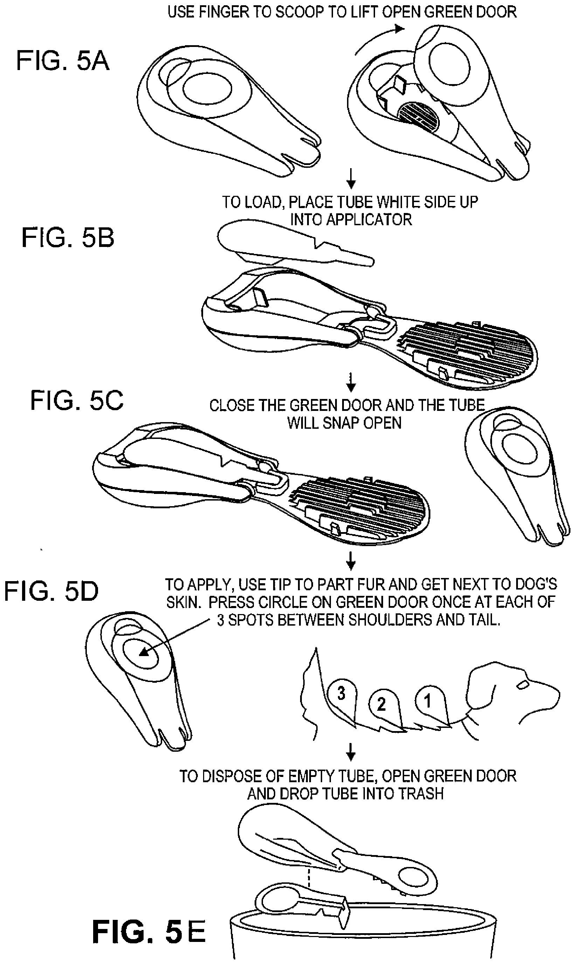

FIG. 5 shows the ease of use of one embodiment of the device. FIG. 5A shows opening the door; FIG. 5B shows inserting a pod or cartridge comprising a formulation; FIG. 5C shows closing the door and snapping open the cartridge's conduit for application; FIG. 5D shows applying the formulation to a pet (here, a dog); and FIG. 5E shows easy, no-mess disposal of the cartridge in the trash.

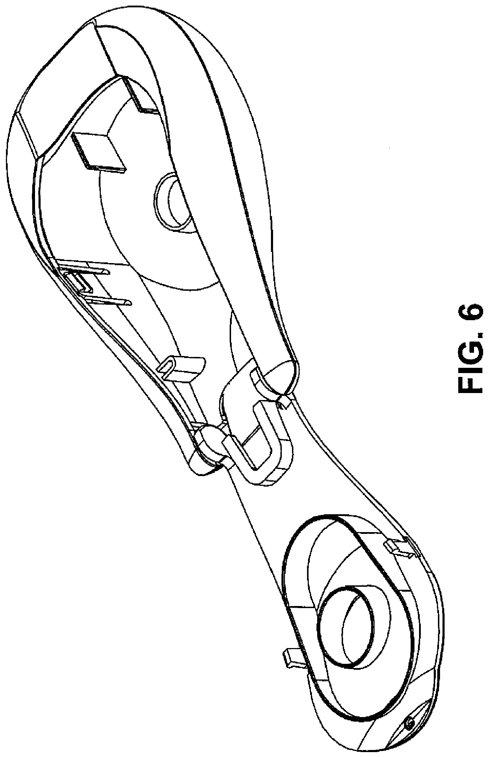

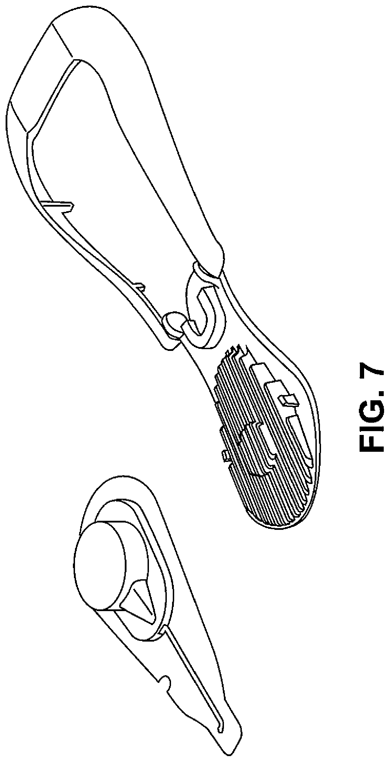

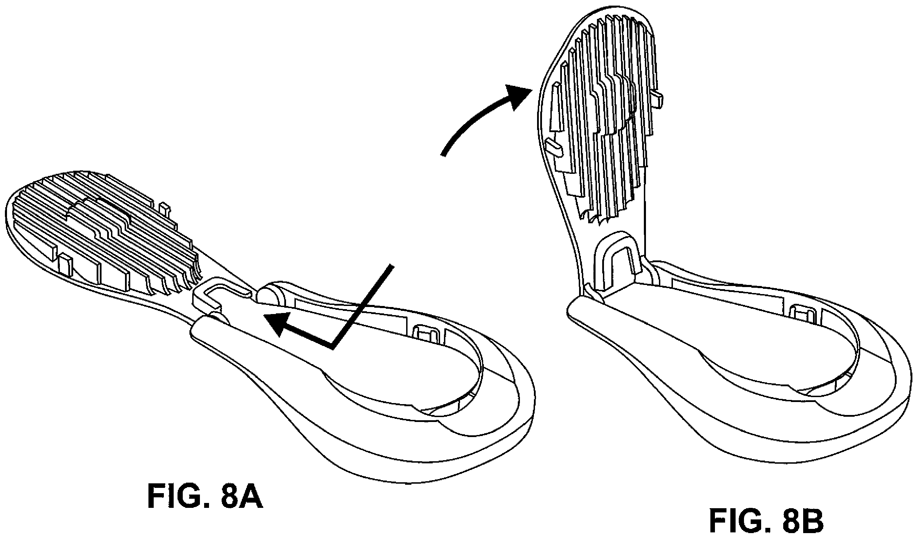

FIG. 6 presents an interior view of an embodiment of the device, with a perspective view of the front, top, and right side when the device is open and without a cartridge. In addition, FIG. 7 presents an additional interior view of an embodiment of the device, with a view of the bottom side of a cartridge for use in the device and a partial view of the device when it is open. FIGS. 8A-B present additional interior views of an embodiment of the device, with Fig. 8A showing the cartridge inserted into the device when it is open; and FIG. 8B showing the cartridge inserted into the device when the movable top piece is partially closed.

## Claims

1. A device for applying a formulation to skin, the device comprising:
(a) a housing (104, 304, 405), wherein the housing (104, 304, 405) comprises a chamber including a lid (204);
(b) a cartridge (210), wherein the cartridge (210) comprises the formulation and the chamber is adapted for receiving the cartridge (210) and the lid (204) includes a U-shaped raised portion (203, 403) to seat the cartridge (210);
(c) a spreading means (101, 301, 307), wherein the spreading means (101, 301, 307) is operably connected with the housing (104, 304, 405) or cartridge (210); wherein during use, the spreading means (101, 301, 307) moves or spreads a plurality of the skin's epidermal growths;
(d) an ejecting means, wherein the ejecting means ejects the cartridge (210) without a user's touching of the cartridge (210) or formulation; and
(e) a dispensing means; wherein the dispensing means is operably connected with the cartridge (210); and wherein during use, the U-shaped raised portion (203, 403) seats the cartridge (210) and the dispensing means dispenses the formulation from the cartridge (210) onto the skin.

2. The device of claim 1, wherein the housing (104, 304, 405) is substantially composed of a polymer.

3. The device of claim 1, wherein the chamber is configured with a size and shape that fits the cartridge (210) directed to a specific use.

4. The device of claim 1, wherein during use, the spreading means (101, 301, 307) is proximate to the dispensing means that dispenses the formulation from the cartridge (210) to the skin.

5. The device of claim 1, wherein the spreading means (101, 301, 307) is operably connected with the housing (104, 304, 405).

6. The device of claim 1, wherein the spreading means (101, 301, 307) is a tab (307), a trident, or a comb.

7. The device of claim 1, wherein the spreading means (101, 301, 307) is a tab (307); wherein the tab (307) is proximate to the dispensing means for the formulation; and wherein during use, the tab (307) spreads the plurality of epithelial growths to improve the formulation's contact with the skin.

8. The device of claim 7, wherein the spreading means (101, 301, 307) extends from the housing at a non-zero angle.

9. The device of claim 1, wherein after use, the ejecting means ejects the cartridge (210) without a user's touching of the cartridge (210) or formulation.

10. The device of claim 1, wherein the device further comprises:
(f) a triggering means (105, 201, 401, 402); wherein the triggering means (105, 201, 401, 402) is operably connected with the housing (104, 304, 405) or cartridge (210); and wherein an activation of the triggering means (105, 201, 401, 402) allows the formulation to be dispensed from the cartridge (210).

11. The device of claim 1, wherein the device further comprises:
(g) a measuring means (206); wherein the measuring means (206) is operably connected with the housing (104, 304, 405) or cartridge (210); and wherein the measuring means (206) allows the user to identify how much formulation has been dispensed.

12. The device of claim 1, wherein the cartridge (210) further comprises:
a reservoir (209, 407); wherein the reservoir (209, 407) comprises the formulation; and
wherein the dispensing means is operably connected with the reservoir (209, 407); and wherein during use, the dispensing means dispenses the formulation onto the skin.

13. A method for applying a formulation to skin, the method comprising the steps:
(a) applying the formulation within the cartridge (210) of claim 1 to the skin by means of the device of claim 1; and
(b) thereafter ejecting the cartridge (210).

## Patentansprüche

1. Vorrichtung zum Auftragen einer Rezeptur auf die Haut, wobei die Vorrichtung aufweist:
(a) ein Gehäuse (104, 304, 405), wobei das Gehäuse (104, 304, 405) eine Kammer aufweist, die einen Deckel (204) enthält;
(b) einen Einsatz (210), wobei der Einsatz (210) die Rezeptur aufweist und die Kammer dazu ausgelegt ist, den Einsatz (210) aufzunehmen, und der Deckel (204) einen U-förmigen erhobenen Bereich (203, 403) enthält, um den Einsatz (10) einzusetzen;
(c) ein Verteilungsmittel (101, 301, 307), wobei das Verteilungsmittel (101, 301, 307) funktionswirksam mit dem Gehäuse (104, 304, 405) oder dem Einsatz (210) verbunden ist;
wobei das Verteilungsmittel (101, 301, 307) während des Gebrauchs eine Vielzahl von Epidermalwachstumselementen der Haut bewegt oder verteilt;
(d) ein Auswurfmittel, wobei das Auswurfmittel den Einsatz (210) aufwirft, ohne dass ein Benutzer den Einsatz (210) oder die Rezeptur berührt; und
(e) ein Ausgabemittel; wobei das Ausgabemittel funktionswirksam mit dem Einsatz (210) verbunden ist; und wobei der U-förmige erhobene Bereich (203, 403) den Einsatz (210) während des Gebrauchs hält und das Ausgabemittel die Rezeptur von dem Einsatz (210) auf die Haut ausgibt.

2. Vorrichtung nach Anspruch 1, wobei das Gehäuse (104, 304, 405) im Wesentlichen aus einem Polymer besteht.

3. Vorrichtung nach Anspruch 1, wobei die Kammer in einer Größe und einer Form ausgestaltet ist, die zu dem Einsatz (210) passt, der auf einen speziellen Verwendungszweck ausgerichtet ist.

4. Verfahren nach Anspruch 1, wobei das Verteilungsmittel (101, 301, 307) während des Gebrauchs in der Nähe des Ausgabemittels angeordnet ist, das die Rezeptur von dem Einsatz (210) auf die Haut ausgibt.

5. Vorrichtung nach Anspruch 1, wobei das Verteilungsmittel (101, 301, 307) funktionswirksam mit dem Gehäuse (104, 304, 405) verbunden ist.

6. Vorrichtung nach Anspruch 1, wobei das Verteilungsmittel (101, 301, 307) eine Zunge (307), ein Dreizack oder ein Kamm ist.

7. Vorrichtung nach Anspruch 1, wobei das Verteilungsmittel (101, 301, 307) eine Zunge (307) ist; wobei die Zunge (307) in der Nähe des Verteilungsmittels für die Rezeptur angeordnet ist; und wobei während des Gebrauchs die Zunge (307) die Vielzahl der Epidermalwachstumselemente verteilt, um den Kontakt der Rezeptur mit der Haut zu verbessern.

8. Vorrichtung nach Anspruch 7, wobei sich das Verteilungsmittel (101, 301, 307) vom Gehäuse in einem Winkel ungleich o erstreckt.

9. Vorrichtung nach Anspruch 1, wobei das Auswurfmittel den Einsatz (210) nach Gebrauch auswirft, ohne dass ein Benutzer den Einsatz (210) oder die Rezeptur berührt.

10. Vorrichtung nach Anspruch 1, wobei die Vorrichtung weiterhin aufweist:
(f) ein Auslösemittel (105, 201, 401, 402); wobei das Auslösemittel (105, 201, 401, 402) funktionswirksam mit dem Gehäuse (104, 304, 405) oder dem Einsatz (210) verbunden ist; und wobei eine Aktivierung des Auslösemittels (105, 201, 401, 402) ermöglicht, dass die Rezeptur aus dem Einsatz (210) verteilt wird.

11. Vorrichtung nach Anspruch 1, wobei die Vorrichtung weiterhin aufweist:
(g) ein Messmittel (206); wobei das Messmittel (206) funktionswirksam mit dem Gehäuse (104, 304, 405) oder dem Einsatz (210) verbunden ist; und wobei das Messmittel (206) dem Benutzer ermöglicht zu ermitteln, wie viel von der Rezeptur verteilt wurde.

12. Vorrichtung nach Anspruch 1, wobei der Einsatz (210) ferner aufweist:
ein Reservoir (209, 407); wobei das Reservoir (209, 47) die Rezeptur aufweist; und
wobei das Verteilungsmittel funktionswirksam mit dem Reservoir (209, 407) verbunden ist; und wobei das Ausgabemittel während des Gebrauchs die Rezeptur auf die Haut ausgibt.

13. Verfahren zum Auftragen einer Rezeptur auf die Haut, wobei das Verfahren aufweist:
(a) Auftragen der Rezeptur in dem Einsatz (210) nach Anspruch 1 auf die Haut mittels der Vorrichtung von Anspruch 1; und
(b) danach Auswerfen des Einsatzes (210).

## Revendications

1. Dispositif pour appliquer une formulation sur la peau, le dispositif comprenant :
(a) un logement (104, 304, 405), lequel logement (104, 304, 405) comprend une enceinte incluant un couvercle (204) ;
(b) une cartouche (210), laquelle cartouche (210) comprend la formulation et l'enceinte est adaptée pour recevoir la cartouche (210) et le couvercle (204) inclut une partie surélevée en forme de U (203, 403) pour accueillir la cartouche (210) ;
(c) un moyen d'écartement (101, 301, 307), lequel moyen d'écartement (101, 301, 307) est raccordé de façon opérationnelle au logement (104, 304, 405) ou à la cartouche (210) ; lequel moyen d'écartement (101, 301, 307), lors de l'utilisation, déplace ou écarte une pluralité des croissances épidermiques de la peau ;
(d) un moyen d'éjection, lequel moyen d'éjection éjecte la cartouche (210) sans que l'utilisateur ne touche la cartouche (210) ou la formulation ; et
(e) un moyen de distribution, lequel moyen de distribution est raccordé de façon opérationnelle à la cartouche (210) ; et dans lequel, lors de l'utilisation, la partie surélevée en forme de U (203, 403) accueille la cartouche (210) et le moyen de distribution distribue la formulation à partir de la cartouche (210) jusque sur la peau.

2. Dispositif selon la revendication 1, dans lequel le logement (104, 304, 405) est essentiellement composé d'un polymère.

3. Dispositif selon la revendication 1, dans lequel l'enceinte est configurée avec une dimension et une forme qui tient dans la cartouche (210) destinée à une utilisation spécifique.

4. Dispositif selon la revendication 1, dans lequel, lors de l'utilisation, le moyen d'écartement (101, 301, 307) est proche du moyen de distribution qui distribue la formulation à partir de la cartouche (210) jusque sur la peau.

5. Dispositif selon la revendication 1, dans lequel le moyen d'écartement (101, 301, 307) est raccordé de façon opérationnelle au logement (104, 304, 405).

6. Dispositif selon la revendication 1, dans lequel le moyen d'écartement (101, 301, 307) est une languette (307), un trident ou un peigne.

7. Dispositif selon la revendication 1, dans lequel le moyen d'écartement (101, 301, 307) est une languette (307) ; laquelle languette (307) est proche du moyen de distribution pour la formulation ; et dans lequel, lors de l'utilisation, la languette (307) écarte la pluralité de croissances épithéliales pour améliorer le contact de la formulation avec la peau.

8. Dispositif selon la revendication 7, dans lequel le moyen d'écartement (101, 301, 307) s'étend à partir du logement à un angle non nul.

9. Dispositif selon la revendication 1, dans lequel, après l'utilisation, le moyen d'éjection éjecte la cartouche (210) sans que l'utilisateur ne touche la cartouche (210) ou la formulation.

10. Dispositif selon la revendication 1, lequel dispositif comprend en outre :
(f) un moyen de déclenchement (105, 201, 401, 402) ; lequel moyen de déclenchement (105, 201, 401, 402) est raccordé de façon opérationnelle au logement (104, 304, 405) ou à la cartouche (210) ; et dans lequel une activation du moyen de déclenchement (105, 201, 401, 402) permet à la formulation d'être distribuée à partir de la cartouche (210).

11. Dispositif selon la revendication 1, lequel dispositif comprend en outre :
(g) un moyen de mesure (206) ; lequel moyen de mesure (206) est raccordé de façon opérationnelle au logement (104, 304, 405) ou à la cartouche (210) ; et lequel moyen de mesure (206) permet à l'utilisateur d'identifier combien de formulation a été distribuée.

12. Dispositif selon la revendication 1, dans lequel la cartouche (210) comprend en outre :
un réservoir (209, 407) ; lequel réservoir (209, 407) comprend la formulation ; et
dans lequel le moyen de distribution est raccordé de façon opérationnelle au réservoir (209, 407) ; et dans lequel, lors de l'utilisation, le moyen de distribution distribue la formulation sur la peau.

13. Procédé pour appliquer une formulation sur la peau, le procédé comprenant les étapes :
(a) d'application de la formulation à l'intérieur de la cartouche (210) selon la revendication 1 sur la peau au moyen du dispositif selon la revendication 1 ; et
(b) puis d'éjection de la cartouche (210).
